(19) Europäisches Patentamt

European Patent Office

Office européen des brevets

(11) **EP 1 133 806 B1**

(12) **EUROPEAN PATENT SPECIFICATION**

(45) Date of publication and mention
of the grant of the patent:
**04.09.2002 Bulletin 2002/36**

(51) Int Cl.⁷: **H01M 8/02**, C08J 5/22

(86) International application number:
**PCT/GB99/03269**

(21) Application number: **99947733.4**

(22) Date of filing: **04.10.1999**

(87) International publication number:
**WO 00/024074 (27.04.2000 Gazette 2000/17)**

(54) **PROCESS FOR PREPARING A SOLID POLYMER ELECTROLYTE MEMBRANE**

VERFAHREN ZUR HERSTELLUNG EINER FESTPOLYMERELEKTROLYTMEMBRAN

PROCEDE D'OBTENTION D'UNE MEMBRANE ELECTROLYTE DE POLYMERE SOLIDE

(84) Designated Contracting States:
**AT BE CH CY DE DK ES FI FR GB GR IE IT LI LU
MC NL PT SE**

(30) Priority: **16.10.1998 GB 9822576**

(43) Date of publication of application:
**19.09.2001 Bulletin 2001/38**

(73) Proprietor: **Johnson Matthey Public Limited
Company
London SW1Y 5BQ (GB)**

(72) Inventors:
• **GASCOYNE, John Malcolm**
  **High Wycombe, Bucks HP14 4BB (GB)**
• **HARDS, Graham Alan**
  **Reading RG4 9EB (GB)**
• **HOGARTH, Martin Philip**
  **Reading RG4 9LT (GB)**
• **RALPH, Thomas Robertson**
  **Reading, Berkshire RG30 2QJ (GB)**

(56) References cited:
**EP-A- 0 631 337          EP-A- 0 791 974
EP-A- 0 875 524**

**Description**

The present invention relates to a process for the preparation of a solid polymer electrolyte membrane that is of use in electrochemical devices, particularly fuel cells.

Electrochemical cells invariably comprise an ion-conducting electrolyte located between two electrodes, the anode and cathode, at which the desired electrochemical reactions take place. Electrochemical cells may be found in a range of devices, for example fuel cells, batteries, sensors, electrodialysis reactors and electrolytic reactors. They have a diverse range of applications, including the electrolysis of water, chemical synthesis, salt splitting, water purification, effluent treatment and metal finishing, among others.

A fuel cell is an energy conversion device that efficiently converts the stored chemical energy of its fuel and oxidant into electrical energy. It does so by combining either hydrogen, stored as a gas or methanol, stored as a liquid or a gas, with oxygen to generate electrical power. The hydrogen or methanol is oxidised at the anode and oxygen is reduced at the cathode. Both electrodes are of the gas diffusion type. The combined structure formed from the membrane and the two gas diffusion electrodes is known as the membrane electrode assembly (MEA). An electric current is produced by the electron transfer reaction on the electrodes, with the flow of ions in the electrolyte completing the electrical circuit between the electrodes. The electrolyte therefore has to be in contact with both electrodes, and may be acidic or alkaline, and liquid or solid, in nature. In proton exchange membrane fuel cells (PEMFC), the electrolyte is a solid, ion-conducting, *i.e.* a proton-conducting, polymer membrane. The movement of ions between the electrodes is dependent upon the presence of water in the membrane. The membrane must be fully humidified to provide the efficient movement of ions *i.e.* maintain the highest possible specific conductivity. The membrane also prevents large quantities of hydrogen gas supplied at the anode and oxygen supplied at the cathode from passing through the electrolyte and mixing, although there is some transport of the reactant gases - a phenomenon referred to as "cross-over"- which leads to a reduction in cell performance. It is important that this cross-over is minimised. This is a particular problem with conventionally employed membranes at thicknesses below around 40μm, which are otherwise favoured because of their high conductivity in the fuel cell.

Conventionally, the membrane electrolytes useful in fuel cells are selected from commercially available membranes, for example the perfluorinated membranes sold under the trade names Nafion® (E I DuPont de Nemours and Co), Aciplex® (Asahi Chemical Industry) and Flemion® (Asahi Glass KK). In PEMFCs, the membrane electrolyte films - such as the Nafion® types of DuPont - have to be maintained in a highly water-saturated form in order to maximise their proton conductivity properties. Maintaining this high level of water content under operating conditions requires a complex water management system.

Attempts to control the humidity of the membrane have been made, which include saturating the hydrogen gas supplied to the anode and air supplied to the cathode with water vapour. However, this method brings with it its own disadvantages: it makes the overall system more complicated; lowers the fuel cell system efficiency; and can also reduce the cell's performance, particularly at high current densities, due to increased reactant gas (particularly oxygen in air) diffusional problems as a result of the increased amount of water in the electrode layers.

It has been recognised that one way to overcome these difficulties is to employ the concept of a self-humidified membrane. One way that has been suggested that this can be achieved is through the use of water-retaining particles such as highly-dispersed silica ($SiO_2$) incorporated into the membrane electrolyte film. The membrane can retain a higher level of water and is able to function with reduced need for humidifying the inlet gases.

It has also been discovered (European patent specification EP 0631337) that it is possible to incorporate catalyst materials, such as those based on platinum, into the particle containing membrane. This further improves the water retaining ability of the membrane by reacting any hydrogen and oxygen that diffuse into the membrane from each of the catalysed electrode layers to produce water *in situ*. This also can permit the use of thinner membranes, with higher conductivity, by reducing the deleterious effects of reactant gas cross-over that would otherwise occur. Furthermore, the ability to use thinner membranes itself will further reduce the requirements for external humidification of the reactant gases. The back diffusion of water from cathode to anode is enhanced, thereby preventing the anode face of the membrane from drying.

The disclosure of EP 0631337 relates to a solid polymer electrolyte composition comprising solid polymer electrolyte and 0.01 to 80% (based on weight of electrolyte) of at least one metal catalyst, and the use of this composition in fuel cells. The specification further discloses the optional incorporation of 0.01 to 50% of particles and/or fibres of one or more metal oxides into the electrolyte. However, the method disclosed for making such compositions is multi-step and also has associated disadvantages. For example, one such composition is prepared by mixing a 5% w/w isopropanol solution of the electrolyte and an isopropanol dispersion of particles and/or fibres of 0.01 to 50% silica or titania and sufficiently agitating the mixture in an ultrasonic homogeniser. After this, the solution is transferred into a membrane moulding vessel and dried at room temperature, then vacuum-dried at 60°C to remove the isopropanol and form the membrane. To incorporate the metal catalyst, in the case of platinum, the solid polymer electrolyte membrane containing the metal oxide is dipped in distilled water containing a platinum-ammine complex, followed by agitation at 60°C for 5 hours, during which the platinum complex replaces the protons in the membrane by ion-exchange. After washing the membrane in distilled water for over 4 hours, it is dipped in distilled water containing a twenty times equivalence of hydrazine as reductant. After agitation at 60°C for another 5 hours the platinum particles are deposited in the solid polymer electrolyte containing the metal oxide. Then, after the ion-exchange group is protonised by means of treatment with 4 molar concentration hydrochloric acid, the membrane is washed and dried.

Hence, it can be seen that the prior art process for forming the material is complex and involves multiple steps, many of which are time-consuming and may not be easily capable of producing a consistent material. These factors increase the cost of producing this self-humidified membrane. It is essential for the future commercialisation of PEMFC power generation systems that the cost of the materials employed should be minimised. The polymer electrolyte membrane is one of the most expensive materials employed in the PEM fuel cell stack, due principally to the nature of the polymer itself, and its cost is currently too high to enable widespread commercialisation. Therefore, any process for producing more complex membranes needs to be simple, straightforward and low-cost.

A further expensive material in the PEM fuel cell stack is the platinum catalyst conventionally employed in the anode and cathode catalyst layers to promote the fuel cell electrode reactions of hydrogen oxidation and oxygen reduction. For many applications, particularly transportation, there is a need to minimise the use of these materials. It is widely believed that, for successful commercial exploitation, the level of platinum in the fuel cell stack should be reduced to a cell loading of as low as $0.20\text{mg/cm}^2$ of the MEA. Therefore, whilst the incorporation of an additional amount of platinum catalyst into the membrane to effect the combination of any reactant gases permeating into the membrane to produce an improved self-humidified membrane is a worthwhile objective, it is a requirement that this additional amount of platinum be as low as possible. EP 0631337 and J. Electrochem. Soc. 143 (12) 3847-52 (1996) indicate that platinum loadings of $0.07\text{mg/cm}^2$ are employed in the films produced by the above described multi-step process. At some 35% of the total platinum content that may be allowable for vehicular applications of the PEM fuel cell, this may be too high a loading for economic reasons. To our knowledge, therefore, membranes of this type have not yet found application in any of the current, practical pre-production demonstrations of PEM fuel cell power generators.

It is therefore an object of the present invention to overcome the disadvantages of the conventional ion-exchange membranes, without incurring the disadvantages of the prior art process for manufacturing a self-humidifying membrane.

Accordingly, the present invention provides a process for preparing a solid polymer electrolyte membrane comprising an ion-conducting polymer, a catalyst and a high surface area support material, which process comprises:

(a) associating the catalyst with the support material to form a catalysed support; and
(b) producing a membrane from a solution of ion-conducting polymer, such that the catalysed support is incorporated into the solid polymer electrolyte membrane,

characterized in that the ion-conducting polymer is in a liquid medium that is aqueous-based and is essentially free from organic solvents.

Preferably, the ion-conducting polymer composition is an aqueous ion-conducting polymer composition, for example as disclosed in European patent specification number EP 0731520.

The process according to this invention, compared with the prior art multi-step process, is less complex, has fewer and shorter process steps, and is capable of producing a consistent and reproducible product; hence, the cost of producing the membrane is thereby reduced. Furthermore, as the catalyst is directly applied to the high surface area particulate material, which thereby acts as the support for the catalyst, the catalyst is also deposited in a high surface area, small particle size form. This enables the expensive catalyst to be used more effectively and in lower amounts whilst also improving the self-humidifying performance of the membrane. Additionally, when the particulate material has water-retaining properties, all of the catalyst promoting the recombination of hydrogen and oxygen is in immediate and intimate contact with the sites at which the water formed can be stored.

The catalyst may comprise any catalyst material capable of enabling the reaction of hydrogen and oxygen to form water to occur at PEM fuel cell temperatures of typically below 150°C. These include the precious metals, platinum, palladium or rhodium, or combinations thereof, or other transition group metals such as nickel or cobalt. Preferably, the precious metals platinum, palladium or rhodium, or combinations thereof are employed and, more preferably, platinum is used. Suitable catalysation processes, as already practised on a commercial scale, can be employed to form the catalyst material. These processes permit very close control of the amount of catalyst metal deposited onto the support, and thus subsequently incorporated into the membrane. Typically the catalyst metal can be deposited onto the support to loadings of between 0.01 to 50.0% by weight of the total catalysed support, and more preferably from 1 to 25 wt%, such as, for example 1-10 wt%. The amount of catalysed support incorporated into the membrane is such that the metal loading on the membrane is lower than $0.1\text{mg/cm}^2$, preferably lower than $0.05\text{mg/cm}^2$ and, more preferably, lower than $0.03\text{mg/cm}^2$.

The high surface area support material may comprise any known, non-electrically conducting material which can used as a support for a catalyst, such as silica, titania, alumina, zirconium oxides, zirconium silicates, tungsten oxides, tin oxides and zeolites. It may also be advantageous to employ support materials that are known to retain high levels of water once suitably wetted, such as, for example, forms of silica. The material may be in the form of either fibres or small particles, such as particles with a mean particle size in the range of from 0.001μm to 10μm, preferably 0.01μm to 5μm.

For PEM fuel cell applications, the ion-conducting polymer is a proton-conducting polymer, examples of such polymers being well known to those skilled in the art. More than one proton-conducting polymer may be present and/or a non-ion-conducting polymer may also be included in the membrane prepared by the process of the invention.

The proton conducting polymers suitable for use in the present invention may include, but are not limited to:

1) Polymers which have structures with a substantially fluorinated carbon chain optionally having attached to it side chains that are substantially fluorinated. These polymers contain sulphonic acid groups or derivatives of sulphonic acid groups, carboxylic acid groups or derivatives of carboxylic acid groups, phosphonic acid groups or derivatives of phosphonic acid groups, phosphoric acid groups or derivatives of phosphoric acid groups and/or mixtures of these groups. Perfluorinated polymers include Nafion®, Flemion® and Aciplex® commercially available from E. I. DuPont de Nemours (U.S. Patents 3,282,875; 4,329,435; 4,330,654; 4,358,545; 4,417,969; 4,610,762; 4,433,082 and 5,094,995), Asahi Glass KK and Asahi Chemical Industry respectively. Other polymers include those covered in U.S. Patent 5,595,676 (Imperial Chemical Industries plc) and U.S. Patent 4,940,525 (Dow Chemical Co.)

2) Perfluorinated or partially fluorinated polymers containing aromatic rings such as those described in WO 95/08581, WO 95/08581 and WO 97/25369 (Ballard Power Systems) which have been functionalised with $SO_3H$, $PO_2H_2$, $PO_3H_2$, $CH_2PO_3H_2$, COOH, $OSO_3H$, $OPO_2H_2$, $OPO_3H_2$. Also included are radiation or chemically grafted perfluorinated polymers, in which a perfluorinated carbon chain, for example, PTFE, fluorinated ethylene-propylene (FEP), tetrafluoroethylene-ethylene (ETFE) copolymers, tetrafluoroethylene-perfluoroalkoxy (PFA) copolymers, poly (vinyl fluoride) (PVF) and poly (vinylidene fluoride) (PVDF) is activated by radiation or chemical initiation in the presence of a monomer, such as styrene, which can be functionalised to contain an ion exchange group.

3) Fluorinated polymers such as those disclosed in EP 0 331 321 and EP 0345 964 (Imperial Chemical Industries plc) containing a polymeric chain with pendant saturated cyclic groups and at least one ion exchange group which is linked to the polymeric chain through the cyclic group.

4) Aromatic polymers such as those disclosed in EP 0 574 791 and US Patent 5,438,082 (Hoechst AG) for example sulphonated polyaryletherketone. Also aromatic polymers such as polyether sulphones which can be chemically grafted with a polymer with ion exchange functionality such as those disclosed in WO 94/16002 (Allied Signal Inc.).

5) Nonfluorinated polymers include those disclosed in U.S. Patent 5,468,574 (Dais Corporation) for example hydrocarbons such as styrene-(ethylene-butylene)- styrene, styrene-(ethylene-propylene)-styrene and acrylonitrile-butadiene-styrene co- and terpolymers where the styrene components are functionalised with sulphonate, phosphoric and/or phosphonic groups.

6) Nitrogen containing polymers including those disclosed in U.S. Patent 5,599,639 (Hoechst Celanese Corporation), for example, polybenzimidazole alkyl sulphonic acid and polybenzimidazole alkyl or aryl phosphonate.

7) Any of the above polymers which have the ion exchange group replaced with a sulphonyl chloride ($SO_2Cl$) or sulphonyl fluoride ($SO_2F$) group rendering the polymers melt processable. The sulphonyl fluoride polymers may form part of the precursors to the ion exchange membrane or may be arrived at by subsequent modification of the ion exchange membrane. The sulphonyl halide moieties can be converted to a sulphonic acid using conventional techniques such as, for example, hydrolysis.

Non-ion conducting polymeric materials which may be used in addition to the one or more ion conducting or proton conducting polymers include PTFE, FEP, PVDF, Viton® and hydrocarbon types such as polyethylene, polypropylene and polymethylmethacrylate.

Other ion-conducting polymeric materials which are not proton conducting polymers may be used. For example, such polymers can be used for applications requiring an anion exchange membrane. Anion exchange polymers are generally based on quaternary ammonium groups, rather than the fixed sulphonic acid groups in proton conducting polymers. These include, for example, the tetraalkyl ammonium group ($-N^+R_3$) and the quaternary ammonium centre in Tosflex® membranes ($-N(R_1)(CH_2)_yN^+(R_3)$) supplied by Tosoh. However, it can be envisaged that all of the proton exchange polymers described above could have anion exchange equivalents.

Most preferably, the ion-conducting polymer is an essentially aqueous solution of a perfluorinated co-polymer with ion-exchange groups, such as Nafion® (as mentioned hereinbefore).

The solid polymer electrolyte membrane prepared by the process of the present invention may be employed as or as a component of the ion-exchange membrane of a solid polymer electrolyte chemical cell, such as a PEMFC.

Accordingly, the present invention further provides a membrane prepared by the process of the present invention. The membrane prepared by the process of the present invention is suitably for use in a fuel cell. When for use in a fuel cell, the total thickness of the membrane is suitably less than 200μm and preferably less than 100μm.

The catalysed support can be incorporated into the membrane by a number of methods:

The catalysed support, when in particle or fibre form, can be added directly to an solution of the proton-conducting polymer electrolyte material; preferably, an essentially aqueous solution as described in EP 0731520; the use of an aqueous solution permits the direct addition of the pre-formed catalysed support to the polymer solution, and eliminates the undesirable risk of combustion of the organic solvents that are present in the typically-employed polymer solutions. It is then possible to cast a membrane directly from this mixture according to any of the commonly practised methods in the art to produce a conventional unreinforced membrane. Alternatively, the mixture can be used to form a composite membrane by applying it to a pre-formed reinforcing substrate material such as disclosed in the art, for example an expanded PTFE matrix as disclosed in US 5,599,614 (Bahar et al) or a woven or non-woven fibre network of, for example, glass, silica or polymer fibres as disclosed for example in EP 0875524.

Alternatively, when used in a composite membrane, the catalysed support may, when in particle form, itself comprise the binder used to form the fibre network. Subsequent to the formation of the fibre network or matrix comprising the catalysed support as a binder, a proton-conducting polymer is coated onto the network to produce the final membrane. Alternatively, when in fibre form, the catalysed support may itself form the fibre network prior to coating with a binder and subsequently coating with proton-conducting polymer to form the membrane.

In a further embodiment, a laminated membrane comprising more than one polymer-containing layer is provided, at least one layer of which is a membrane prepared by the process of the invention. Using such a laminated structure, it is possible, for example, to tailor the properties of the laminate membrane opposed to the anode and cathode sides in the MEA of a proton exchange membrane fuel cell, for example, to improve water management in the fuel cell, or to be able to use lower cost proton-conducting polymers to form a substantial part of the laminate membrane.

The present invention also relates to an MEA and a method for the manufacture thereof, wherein the MEA comprises a membrane produced by a process according to the present invention. A further aspect of the present invention relates to a fuel cell and a method for the manufacture thereof, which fuel cell comprises such a membrane and/or MEA.

The present invention will now be described by way of the following non-limiting example(s).

### EXAMPLE 1

### Catalyst Preparation

A 5.6 wt% Pt catalyst supported on silica (Davisil™, grade 644 from Aldrich, The Old Brickyard, New Road, Gillingham, Dorset SP8 4XT) was prepared. The silica (50g) was dispersed in 5 moldm$^{-3}$ nitric acid to clean it and the mixture filtered. The silica filter cake was washed with demineralised water, dried and calcined in air at 500°C for 2 hours. The Pt salt, $Pt(NH_3)_4(OH)_2$ (28.87g), was placed in a beaker and sufficient demineralised water added to produce 100g of solution. The Pt salt solution was added to the calcined silica and the mixture stirred for 5 minutes to allow the silica to adsorb the Pt salt solution. The resultant thick slurry was dried overnight at 60°C in a vacuum oven. It was then calcined in air at 300°C for 2 hours. The resultant 5.6 wt% Pt catalyst supported on silica showed a high level of Pt dispersion on the silica support as shown by a CO metal area of 111m$^2$/gPt and in transmission electron micrographs 1 to 3nm Pt particles, with some clustering forming collections of Pt particles 25nm across.

### Preparation of Mixed Amorphous Silica Substrate

A mixture of chopped silica fibres (0.08g of type QC9/33 - 20mm from Quartz et Silice BP 521-77794 Nemours, Cedex, France and 0.47g of Q fibre type 104 from Johns Manville, Insulation Group, PO Box 5108, Denver, CO, USA) were dispersed with mixing in water (3000cm$^3$). A non-woven matrix was fabricated from the resulting mixture in a single-step process, based on the principles of paper-making technology, at a sheet size of 855cm$^2$ (33cm diameter) in a sheet former (design based on standard SCA sheet former from AB Lorentzen & Wettre, Box 4, S-163 93 Stockholm, Sweden). The fibre sheet was removed from the wire and air dried at 150°C. The non-woven sheet was sprayed with Nafion® 1100 EW solution (5wt% solution in lower aliphatic alcohols from Solution Technologies Inc., Mendenhall, PA 19357, USA) to bind the fibres together. This gives a dry Nafion loading of 0.29mg/cm$^2$.

### Formation of Composite Membrane

The mixed amorphous silica substrate was first cast with aqueous Nafion® solution (50g, 5wt% solution), prepared as described in patent specification numbers EPA 731 520 and US 5,716,437, to produce, after drying, a substrate with a Nafion® layer applied to and partially embedded within one face of the substrate. Aqueous Nafion® solution (12g, 10.3wt%) was heated to 80°C and the 5.6 wt% Pt on silica catalyst (0.28g) added and the mixture silversoned at medium speed for 10 minutes. The mixture was then sprayed onto the second face of the substrate to produce a thin layer of Pt catalyst and dried in the oven at 80°C. This step was repeated until all of the mixture was sprayed onto the second face of the substrate, which was then dried at 150°C to produce a membrane. An identical membrane was membrane facing each other at a temperature of 177°C and a pressure of 296psi (2041kPa) for 6 minutes. This produced a composite membrane of thickness 58μm (as measured by electron probe microanalysis (EPMA)) with a central region that contained the Pt on silica catalyst at a Pt loading of 0.05mg/cm$^2$ and with an overall Nafion® loading of 13.2mg/cm$^2$.

### COMPARATIVE EXAMPLE 1

An identical pair of membranes were prepared from sheets of mixed amorphous silica substrate as detailed above, but without the addition of the Pt on silica catalyst. The two membranes were laminated at a temperature of 177°C and a pressure of 296psi for 6 minutes to produce a composite membrane of comparable thickness (55μm) and Nafion® loading (14.2mg/cm$^2$) to the composite membrane containing the Pt on silica catalyst.

### SINGLE CELL RESULTS

The membranes of Example 1 and Comparative Example 1 were formed into a membrane electrode assembly (MEA) using a carbon supported Pt/Ru catalyst containing anode (0.25mgPt/cm$^2$) and a carbon supported platinum catalyst containing cathode (0.60mgPt/cm$^2$). An evaluation of the MEA comprising the membrane was performed in a single cell operating at a temperature of 80°C with $H_2$/$O_2$ as reactants each at a pressure of 3 atmospheres absolute and reactant stoichiometries of 1.5 for $H_2$ and 10.0 for $O_2$.

A clear determination of the degree of $H_2$ cross-over from the anode to cathode of the MEA is provided by the open circuit voltage (OCV). The OCV is the cell potential when there is no net current flowing in the single cell and is determined by the difference between the cathode and anode potentials. Since hydrogen oxidation at the anode is extremely facile the anode potential is essentially constant in the MEAs examined herein and, consequently the OCV is a relative measure of the cathode potential. The cathode potential is a mixed potential which is determined by the electrode potentials for oxygen reduction ($\frac{1}{2}O_2 + 2H^+ + 2e^- = H_2O$), carbon corrosion ($C + H_2O = CO_2 + 2H^+ + 2e^-$) and hydrogen oxidation ($H_2 = 2H^+ + 2e^-$). Since the change in the oxygen reduction and carbon corrosion potentials is negligible for the MEAs tested herein, any change in the OCV reflects a change in the concentration of hydrogen at the cathode i.e. reflects a change in the rate of hydrogen cross-over from anode to cathode through the membrane of the MEA.

Table 1 shows the OCV values of the MEAs based on the composite membrane of Example 1 at a platinum loading of 0.05mgPt/cm$^2$ and the composite membrane of Comparative Example 1 that does not contain the Pt on silica catalyst. Also, shown for further comparison are the OCV values for identical MEAs based on commercially available Nafion® membranes (from E.I. DuPont de Nemours and Co.22828 NC 87 Hwy. W. Fayetteville, NC 28306). The OCV of the MEA based on the composite membrane of Example 1 is significantly higher than either the OCV of the MEA based on the composite membrane of Comparative Example 1 that does not contain the Pt on silica catalyst or the OCV values of the MEAs based on the Nafion® membranes. This increase in OCV reflects a decrease in the hydrogen concentration at the cathode reflecting the reduction in the rate of hydrogen cross-over due to the recombination of the $H_2$ with $O_2$ at the Pt on silica catalyst located within the composite membrane. The extent of the reduction in hydrogen cross-over can be calculated from the change in the OCV by using the Nernst Equation which shows,

$$(OCV^2 - OCV^1) = RT/nF \ln (p_{H2}{}^1/p_{H2}{}^2)$$

where $P_{H2}$ is the hydrogen pressure at the cathode. By using this equation the $H_2$ cross-over relative to Nafion® 117 can be calculated. As shown in Table 1 the rate of $H_2$ cross-over through the composite membrane of Example 1 is reduced by 85% compared to both Nafion® 117 and the composite membrane of Comparative Example 1, which does not contain the Pt on silica catalyst. This is despite the composite membrane of Example 1 being significantly thinner than Nafion® 117 in the fabricated MEAs (from EPMA measurements) as shown in Table 1. Further, as expected Nafion® 117 gives the lowest $H_2$ cross-over of the commercial membranes tested, since it is the thickest. This is shown in Table 1 by the $H_2$ cross-over of the commercial membranes relative to Nafion® 117, with all showing increased rates of $H_2$ cross-over with as expected, the progressively thinner Nafion® membranes showing progressively higher rates of $H_2$ cross-over relative to Nafion® 117. This highlights just how effective the composite membrane of Example 1 is

at reducing $H_2$ cross-over by recombining the $H_2$ with $O_2$ to produce water. This allows thinner membranes to be employed in the PEMFC, providing the benefits of both higher MEA performance and operation with reduced humidification, due to a higher water content in the membrane and the thinner membrane both promoting the rate of water back- diffusion from the cathode to anode.

## Table 1

### OCVs and reduction in $H_2$ cross-over due to the composite membrane containing the Pt on silica catalyst

| Membrane | OCV / V | Membrane Thickness [a] / $\mu m$ | $H_2$ cross-over Relative to Nafion® 117 / % |
|---|---|---|---|
| Example 1 | 1.058 | 58 | - 85 |
| Comparative Example 1 | 1.029 | 55 | 0 |
| Nafion® 112 | 1.005 | 40 | +79 |
| Nafion® 1135 | 1.018 | 75 | +52 |
| Nafion® 115 | 1.027 | 100 | +12 |
| Nafion® 117 | 1.029 | 150 | 0 |

[a] From EPMA measurements

## Claims

1. A process for preparing a solid polymer electrolyte membrane comprising an ion-conducting polymer, a catalyst and a high surface area support material, which process comprises:

    (a) associating the catalyst with the support material to form a catalysed support; and
    (b) producing a membrane from a solution of ion-conducting polymer, such that the catalysed support is incorporated into the solid polymer electrolyte membrane;

    **characterised in that** the ion-conducting polymer is in a liquid medium that is aqueous-based and is essentially free from organic solvents.

2. A process according to claim 1, wherein the catalyst comprises one or more precious metals, or combinations thereof, and/or other transition group metals.

3. A process according to claim 1 or 2, wherein the catalyst comprises platinum.

4. A process according to any preceding claim, wherein the catalyst is deposited onto the support material to a loading of between 0.01 to 50.0% by weight of the total catalysed support.

5. A process according to claim 4, wherein the catalyst is deposited onto the support material at a loading of from 1 to 25 wt% of the total catalysed support.

6. A process according to claim 5, wherein the catalyst is deposited onto the support material at a loading of from 1 to 10 wt% of the total catalysed support.

7. A process according to any preceding claim, wherein the amount of catalysed support incorporated into the membrane is such that the metal loading is lower than 0.1mg/cm$^2$.

8. A process according to claim 7 wherein the amount of catalysed support incorporated into the membrane is such that the metal loading is lower than 0.05mg/cm$^2$.

9. A process according to claim 8 wherein the amount of catalysed support incorporated into the membrane is such that the metal loading is lower than 0.03mg/cm$^2$.

10. A process according to any preceding claim, wherein the high surface support material is non-electrically conducting.

11. A process according to any preceding claim, wherein the high surface area support material is selected from silica, titania, alumina, zirconium oxides, zirconium silicates, tungsten oxides, tin oxides and zeolites.

12. A process according to any preceding claim, wherein the support material is in the form of fibres.

13. A process according to any one of claims 1 to 11, wherein the support material is in the form of particles with a mean particle size in the range of from 0.001μm to 10μm.

14. A process according to claim 13, wherein the mean particle size is in the range of from 0.01μm to 5μm.

15. A process according to any preceding claim, wherein the ion-conducting polymer composition is an essentially aqueous solution of a perfluorinated co-polymer with ion-exchange groups.

16. A process according to any preceding claim, wherein the catalysed support, in particle or fibre form, is added directly to a solution of the ion-conducting polymer electrolyte.

17. A process according to any of claims 1 to 10 or 12 to 14, wherein the catalysed support is in particle form and is applied as a binder to form a fibre network to which the ion-conducting polymer is subsequently applied to produce the membrane.

18. A process according to any of claims 1 to 12 or 15, wherein the catalysed support is in fibre form and itself is formed into a fibre network which is thereafter bound with a binder, and the ion-conducting polymer is subsequently applied to produce the membrane.

**Patentansprüche**

1. Verfahren zur Herstellung einer festen Polymer-Elektrolyt-Membran, die ein ionenleitendes Polymer, einen Katalysator und ein Trägermaterial mit einer großen spezifischen Oberfläche umfasst, wobei das Verfahren umfasst:

   (a) das Kombinieren des Katalysators mit dem Trägermaterial zur Bildung eines katalysierten Trägers; und
   (b) die Herstellung einer Membran aus einer Lösung des ionenleitenden Polymers, sodass der katalysierte Träger der festen Polymer-Elektrolyt-Membran einverleibt wird,

   **dadurch gekennzeichnet, dass** das ionenleitende Polymer ein flüssiges Medium ist, das auf Wasser basiert und im wesentlichen frei von organischen Lösungsmitteln ist.

2. Verfahren nach Anspruch 1, worin der Katalysator ein oder mehr Edelmetalle oder Kombinationen davon und/oder andere Metalle der Übergangsgruppe umfasst.

3. Verfahren nach Anspruch 1 oder 2, worin der Katalysator Platin umfasst.

4. Verfahren nach irgendeinem vorhergehenden Anspruch, worin der Katalysator auf dem Trägermaterial bis zu einer Beladung zwischen 0,01 und 50,0 Gew.-%, bezogen auf das Gewicht des gesamten katalysierten Trägers, abgeschieden wird.

5. Verfahren nach Anspruch 4, worin der Katalysator auf dem Trägermaterial in einer Beladung von 1 bis 25 Gew.-%, bezogen auf das Gewicht des gesamten katalysierten Trägers, abgeschieden wird.

6. Verfahren nach Anspruch 5, worin der Katalysator auf dem Trägermaterial in einer Beladung von 1 bis 10 Gew.-%, bezogen auf das Gewicht des gesamten katalysierten Trägers, abgeschieden wird.

7. Verfahren nach irgendeinem vorhergehenden Anspruch, worin die Menge des der Membran einverleibten katalysierten Trägers so ist, dass die Metallbeladung weniger als 0,1 mg/cm$^2$ beträgt.

8. Verfahren nach Anspruch 7, worin die Menge des der Membran einverleibten katalysierten Trägers so ist, dass die Metallbeladung weniger als 0,05 mg/cm$^2$ beträgt.

9. Verfahren nach Anspruch 8, worin die Menge des der Membran einverleibten katalysierten Trägers so ist, dass die Metallbeladung weniger als 0,03 mg/cm$^2$ beträgt.

10. Verfahren nach irgendeinem vorhergehenden Anspruch, worin das Trägermaterial mit großer spezifischer Oberfläche nicht elektrisch leitend ist.

11. Verfahren nach irgendeinem vorhergehenden Anspruch, worin das Trägermaterial mit großer spezifischer Oberfläche ausgewählt wird aus der Gruppe Siliciumdioxid, Titandioxid, Aluminiumoxid, Zirkoniumoxide, Zirkoniumsilicate. Wolframoxide, Zinnoxide und Zeolithe.

12. Verfahren nach irgendeinem vorhergehenden Anspruch, worin das Trägermaterial in Form von Fasern vorliegt.

13. Verfahren nach einem der Ansprüche 1 bis 11, worin das Trägermaterial in Form von Teilchen mit einer mittleren Teilchengröße in dem Bereich von 0,001 bis 10 µm vorliegt.

14. Verfahren nach Anspruch 13, worin die mittlere Teilchengröße in dem Bereich von 0,01 bis 5 µm liegt.

15. Verfahren nach irgendeinem vorhergehenden Anspruch, worin die ionenleitende Polymerzusammensetzung eine im wesentlichen wässrige Lösung eines perfluorierten Copolymers mit Ionenaustauschgruppen ist.

16. Verfahren nach irgendeinem vorhergehenden Anspruch, worin der katalysierte Träger in Teilchen- oder Faserform direkt einer Lösung des ionenleitenden Polymer-Elektrolyten zugesetzt wird.

17. Verfahren nach irgendeinem der Ansprüche 1 bis 10 oder 12 bis 14, worin der katalysierte Träger in Teilchenform vorliegt und als Bindemittel aufgebracht wird zur Bildung eines Fasernetzwerks, auf das anschließend das ionenleitende Polymer aufgebracht wird zur Herstellung der Membran.

18. Verfahren nach irgendeinem der Ansprüche 1 bis 12 oder 15, worin der katalysierte Träger in Faserform vorliegt und selbst zu einem Fasernetzwerk geformt wird, das anschließend mit einem Bindemittel gebunden wird und das ionenleitende Polymer danach aufgebracht wird zur Herstellung der Membran.


**Revendications**

1. Procédé pour préparer une membrane d'électrolyte polymère solide comportant un polymère conducteur d'ions, un catalyseur et un matériau de support à grande surface superficielle, lequel procédé comporte les étapes consistant à :

   (a) associer le catalyseur au matériau de support pour former un support catalysé, et
   (b) produire une membrane à partir d'une solution de polymère conducteur d'ions, de sorte que le support catalysé est incorporé dans la membrane d'électrolyte polymère solide,

   **caractérisé en ce que** le polymère conducteur d'ions se trouve dans un milieu liquide qui est de type aqueux et est essentiellement exempt de suivants organiques.

2. Procédé selon la revendication 1, dans lequel le catalyseur comporte un ou plusieurs métaux précieux, ou combinaisons de ceux-ci, et/ou d'autres métaux du groupe de transition.

3. Procédé selon la revendication 1 ou 2, dans lequel le catalyseur comporte du platine.

4. Procédé selon l'une quelconque des revendications précédentes, dans lequel le catalyseur est déposé sur le matériau de support jusqu'à une charge comprise entre 0,01 et 50,0 % en poids du support catalysé total.

5. Procédé selon la revendication 4, dans lequel le catalyseur est déposé sur le matériau de support à une charge comprise entre 1 et 25 % en poids du support catalysé total.

6. Procédé selon la revendication 5, dans lequel le catalyseur est déposé sur le matériau de support à une charge comprise entre 1 et 10 % en poids du support catalysé total.

7. Procédé selon l'une quelconque des revendications précédentes, dans lequel la quantité de support catalysé incorporée dans la membrane est telle que la charge de métal est inférieure à 0,1 mg/cm$^2$.

8. Procédé selon la revendication 7, dans lequel la quantité de support catalysé incorporée dans la membrane est telle que la charge de métal est inférieure à 0, 05 mg/cm$^2$.

9. Procédé selon la revendication 8, dans lequel la quantité de support catalysé incorporée dans la membrane est telle que la charge de métal est inférieure à 0,03 mg/cm$^2$.

10. Procédé selon l'une quelconque des revendications précédentes, dans lequel le matériau de support à grande surface est non-électriquement conducteur.

11. Procédé selon l'une quelconque des revendications précédentes, dans lequel le matériau de support à grande surface superficielle est sélectionné parmi de la silice, du dioxyde de titane, de l'alumine, des oxydes de zirconium, des silicates de zirconium, des oxydes de tungstène, des oxydes d'étain et des zéolites.

12. Procédé selon l'une quelconque des revendications précédentes, dans lequel le matériau de support est sous la forme de fibres.

13. Procédé selon l'une quelconque des revendications 1 à 11, dans lequel le matériau de support est sous la forme de particules ayant une taille de particule moyenne dans la plage allant de 0,001 μm à 10 μm.

14. Procédé selon la revendication 13, dans lequel la taille de particule moyenne se trouve dans la plage allant de 0,01 μm à 5 μm.

15. Procédé selon l'une quelconque des revendications précédentes, dans lequel la composition polymère conductrice d'ions est une solution essentiellement aqueuse d'un copolymère perfluoré ayant des groupes échangeurs d'ions.

16. Procédé selon l'une quelconque des revendications précédentes, dans lequel le support catalysé, sous forme particulaire ou fibreuse, est ajouté directement à une solution de l'électrolyte polymère conducteur d'ions.

17. Procédé selon l'une quelconque des revendications 1 à 10 ou 12 à 14, dans lequel le support catalysé est sous une forme particulaire et est appliqué en tant que liant pour former un réseau de fibres auquel le polymère conducteur d'ions est appliqué par la suite pour produire la membrane.

18. Procédé selon l'une quelconque des revendications 1 à 12 ou 15, dans lequel le support catalysé est sous une forme fibreuse et est lui-même forme dans un réseau de fibres qui est, après ceci, lié à l'aide d'un liant, et le polymère conducteur d'ions est par la suite appliqué pour produire la membrane.